# FASCICULE DE BREVET EUROPEEN

(11) **EP 3 078 999 B1**
(45) Date de publication et mention de la délivrance du brevet: **13.06.2018**
(21) Numéro de dépôt: 16164747.4
(22) Date de dépôt: 11.04.2016
(51) Int. Cl.: G02B 6/38

(54) **CONNECTEUR POUR FIBRES OPTIQUES COLLIMATÉES**
STECKER FÜR GEBÜNDELTE OPTISCHE FASERN
CONNECTOR FOR COLLIMATED OPTICAL FIBRES

(30) Priorité: 09.04.2015 FR 1553086
(43) Date de publication de la demande: 12.10.2016
(73) Titulaire: SOURIAU, 78000 Versailles Cedex (FR)
(72) Inventeur: PHILIPPE, Alain, 72560 CHANGE (FR); CLAUDOT, Sébastien, 72160 Thorigné-Sur-Dué (FR)
(74) Mandataire: Ipside

(56) Documents cités:
- WO-A1-2011/014264
- WO-A2-2012/066127
- US-A1- 2013 044 978

## Description

L'invention concerne un connecteur pour fibres optiques collimatées. L'invention est destinée au domaine des dispositifs pour la connexion longitudinale, selon un jonction bout à bout, de deux fibres optiques, protégées dans des viroles, ou « ferrules », ladite connexion assurant la continuité du signal entre lesdites fibres. L'invention est adaptable à un connecteur monovoie comme à un connecteur multivoie. L'invention et plus particulièrement adapté réalisation d'un contact par une jonction bout à bout ou « butt joînt » entre deux fibres optiques.

Le document EP 1 026 527 décrit un connecteur de type fibre à fibre comportant un manchon coulissant permettant d'accéder à l'extrémité de la fibre dans la partie femelle du connecteur afin de procéder au nettoyage de ladite extrémité.

D'autres exemples de connecteur pour fibres optiques sont illustré dans les documents suivant: WO 2011/014264, WO2012/0066127 et US 2013/0044978.

Le connecteur objet de l'invention utilise une lentille à la sortie de chaque fibre afin d'élargir le faisceau en le collimatant, c'est-à-dire en créant un faisceau de rayons parallèles à l'axe de la fibre. Comparativement à une connexion fibre à fibre, une connexion par l'intermédiaire d'un contact collimaté est plus tolérante vis-à-vis du positionnement axial relatif des contacts et des éventuelles salissures présentes sur les extrémités desdits contacts. Néanmoins, une telle connexion, du simple fait de la présence des lentilles, présente une perte d'insertion plus élevée qu'un contact fibre à fibre, ladite perte d'insertion pouvant couramment atteindre 1,5 dB contre 0,3 dB dans le cas d'un contact fibre à fibre. Cette perte d'insertion augmente encore en cas de pollution des lentilles et surtout en présence d'un défaut de positionnement relatif, latéral ou angulaire, des fibres optiques.

L'invention vise à assurer une perte d'insertion minimale entre deux fibres optiques connectées par des contacts collimatés et concerne à cette fin un connecteur pour fibres optiques selon la revendication 1. L'invention est remarquable en ce que le puits (120) de réception comprend la caractéristique d'un ressort appliquant sur ladite broche un effort axial de coulissement par rapport au puits de réception entre une position axiale, dite libre, de ladite broche où la lentille affleure la face avant du corps, et une position axiale, dite engagée, où la lentille est rétractée dans la douille de guidage, d'une distance égale ou supérieure à un diamètre de la broche tout en restant centrée dans ladite douille de guidage sur une longueur égale ou supérieure à un diamètre de la broche.

Ainsi, l'action du ressort sur la broche de la partie femelle du connecteur, permet d'obtenir une position affleurante de la lentille pour permettre un nettoyage aisé de celle-ci.

L'invention est avantageusement mise en oeuvre selon les modes de réalisation et les variantes exposés ci-après, lesquels sont à considérer individuellement ou selon toute combinaison techniquement opérante.

Selon une variante de réalisation, la douille de guidage est fixée axialement dans le corps de la partie femelle. Cette variante permet de protéger la douille de guidage contre toute dégradation lorsque le connecteur est ouvert.

Ainsi, selon un mode de réalisation avantageux, l'extrémité axiale de la douille de guidage est en retrait axial par rapport à la face avant de la partie femelle, et avantageusement, le puits d'insertion comprend un chanfrein dans le corps de la partie femelle devant l'extrémité de la douille de guidage. Ledit chanfrein permet de faciliter le centrage de la broche de la partie mâle dans la partie femelle lors de l'accouplement du connecteur.

Selon un mode de réalisation, la broche femelle du connecteur objet de l'invention comprend :
d. une cage de maintien de la douille de guidage.

Ce mode de réalisation permet de rendre le centrage relatif de la broche mâle et de la broche femelle, indépendant du corps du connecteur.

Selon un mode de réalisation particulièrement avantageux, la partie mâle du connecteur objet de l'invention comporte un puits de guidage, et le connecteur, comprend, selon ce mode de réalisation :
bi. un ressort appliquant sur ladite broche mâle un effort axial de coulissement par rapport au puits de guidage entre une position axiale, dite libre, où ladite broche fait saillie par rapport à la face avant de la partie mâle d'une distance supérieure à un diamètre de la broche, et une position dite engagée, où la partie mâle étant connectée à la partie femelle du connecteur, la broche mâle pénètre dans la douille de guidage d'une distance égale ou supérieure à un diamètre de ladite broche.

Ainsi, l'action combinée des deux ressorts assure un positionnement axial relatif optimal des deux broches lorsque les parties mâles et femelles du connecteur sont assemblées, indépendamment du positionnement axial relatif des deux parties.

Selon une variante de réalisation, les ressorts agissant sur les broches des parties mâles et femelles sont de même raideur. Ce mode de réalisation utilisant essentiellement les mêmes éléments pour les parties mâles et femelles est plus économique.

Avantageusement, le ressort agissant sur la broche de la partie mâle est de raideur supérieure au ressort agissant sur la broche de la partie femelle. Ce mode de réalisation, bien que conservant les avantages du contact flottant axialement, permet d'assurer que la broche de la partie mâle pénètre sur une longueur suffisante de guidage dans la douille de guidage de la partie femelle.

Avantageusement, les lentilles des broches de la partie mâle et de la partie femelle sont en retrait axial par rapport l'extrémité desdites broches. Cette disposition protège les lentilles des rayures notamment lorsque les broches sont en contact axial dans la douille de guidage. La partie légèrement proéminente de l'extrémité de la broche par rapport à la lentille coopère aussi avec le chanfrein d'entrée de la partie femelle, lorsque celle-ci en est pourvue, pour favoriser le centrage radial de la broche de la partie mâle dans la douille de guidage, ceci sans risque de dégrader la surface de la lentille.

Selon un mode de réalisation particulier, les extrémités des broches de la partie mâle et de la partie femelle sont terminées par des hublots plats. Ce mode de réalisation permet d'obtenir une protection encore plus importante des extrémités des broches, plus particulièrement des lentilles. Les inconvénients de la présence de ces hublots sur la perte d'insertion sont réduits au minimum par la faculté de nettoyer les extrémités des contacts et par le positionnement axial relatif précis des deux extrémités.

L'invention est exposée ci-après selon ses modes de réalisation préférés, nullement limitatifs, et en référence aux figures 1 à 5, dans lesquelles:
- la figure 1 représente, selon une vue en coupe longitudinale, un exemple de réalisation de la partie dite femelle d'un connecteur objet de l'invention ;
- la figure 2 est une vue selon la même coupe longitudinale de la partie dite mâle d'un connecteur objet de l'invention apte à réaliser un accouplement avec la partie femelle de la figure 1, une vie de détail montre un exemple de réalisation de l'extrémité de la broche ;
- la figure 3 est une vue en coupe longitudinale d'un assemblage des parties mâles et femelles d'un exemple de réalisation d'un connecteur selon l'invention correspondant aux figures 1 et 2;
- la figure 4 montre selon une vue schématique en coupe longitudinale un autre exemple de réalisation du connecteur objet de l'invention, figure 4A, en position ouverte et figure 4B en position d'accouplement;
- et la figure 5 représente selon une coupe longitudinale, un exemple de réalisation correspondant à la broche femelle du connecteur selon le schéma de principe de la figure 4.

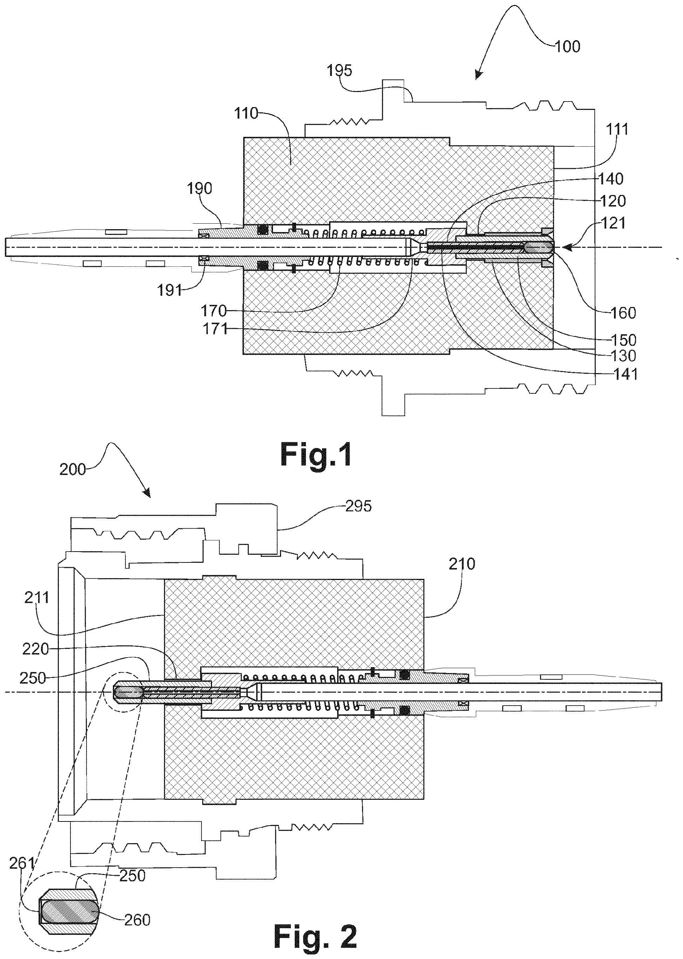

Figure 1, selon un exemple de réalisation de la partie femelle (100) d'un connecteur monovoie, selon l'invention, celui-ci comprend un corps (110) comprenant une face avant (111). Ledit corps est percé d'un puits (120) d'insertion dont l'entrée (121) est chanfreinée. Selon des exemples de réalisation ledit corps est constitué d'une matière plastique moulée ou comprend un assemblage de plusieurs parties, selon des techniques de réalisation connues de l'art antérieur. Selon cet exemple de réalisation, une douille (130) de guidage est fixée dans le puits (120) d'insertion, ladite douille de guidage est par exemple constituée d'une céramique ou d'acier pour assurer sa rigidité. La fibre optique (141) est contenue dans une ferrule (140) en céramique, et l'ensemble est monté dans une carrosserie (150), constituée de céramique ou d'un matériau métallique. Cet ensemble constitue une broche. La ferrule (140) est centrée dans la carrosserie, et ladite carrosserie (150) tubulaire est ajustée sans jeu dans la douille (130) de guidage. La carrosserie maintient en son extrémité axiale une lentille (160) de collimation en contact avec les extrémités confondues de la fibre optique (141) et de la ferrule (140). La lentille est assemblée de manière étanche avec la fibre, la ferrule et la carrosserie, par exemple par collage. Un ressort (170) hélicoïdal de compression, selon cet exemple de réalisation, applique une poussée axiale sur la boche par l'intermédiaire d'un poussoir (171) qui en limite la course axiale de sorte qu'à l'état libre, tel que représenté, l'extrémité de la lentille affleure la face avant (111) du corps et de la douille de guidage selon cet exemple de réalisation. Ainsi, la lentille (160) est facilement accessible dans cette position pour en nettoyer la surface. Le ressort (170) est arrêté à son autre extrémité sur une traversée (190) étanche fixée au corps du connecteur et comprenant des moyens (191) d'étanchéité autorisant le coulissement axial du câble contenant la fibre optique à travers ladite traversée (190) étanche. Finalement ce demi-connecteur (100) comprend des moyens (195) pour son accouplement avec un autre demi-connecteur.

Figure 2, la partie (200) mâle comprend, selon cet exemple de réalisation, sensiblement les mêmes moyens que la partie femelle et comporte des moyens (295) d'accouplement complémentaires à ceux de la partie femelle, afin de réaliser la connexion des deux demi-connecteurs. À la différence de la partie femelle, la broche est saillante par rapport à la face (211) avant du corps (210) du connecteur, d'une longueur au moins égale au diamètre de ladite broche. La carrosserie (250) tubulaire de la broche de la partie mâle est ajustée sans jeu en diamètre par rapport à la douille de guidage de la partie femelle. La broche de la partie mâle coulisse librement dans un puits (220) de guidage du corps (210) de la partie mâle, avec lequel elle présente avantageusement un jeu radial. Selon une vue de détail, la lentille (260) de collimation à l'extrémité de la broche, est en léger retrait axial par rapport à l'extrémité axiale de la carrosserie (250). Ladite lentille (260) est ainsi protégée notamment lors de l'introduction de la broche dans le puits d'insertion de la partie femelle. Selon un mode de réalisation adapté notamment à une mise en oeuvre du connecteur dans des environnements sévères, une lentille (261) hublot protège l'extrémité de la lentille (260) de collimation. Les mêmes aménagements d'extrémités sont possibles sur la broche de la partie femelle.

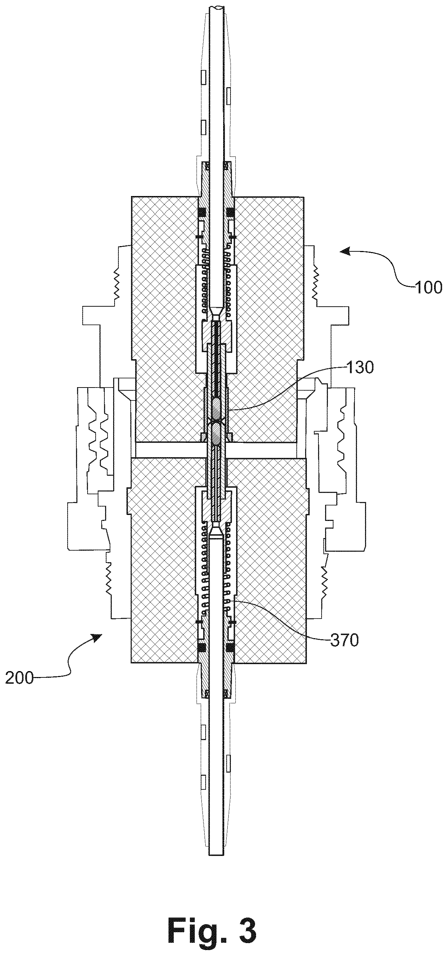

Figure 3, lorsque les deux parties (100, 200) du connecteur sont assemblées, la broche de la partie mâle pénètre dans le puits d'insertion de la partie femelle, en poussant la broche de ladite partie femelle qui coulisse dans la douille (130) de guidage. Ainsi, les deux broches sont centrées l'une par rapport à l'autre par ladite douille de guidage. Les ressorts agissant sur les broches des parties mâles et femelles maintiennent un contact axial entre les extrémités des deux broches. Selon des modes de réalisation, les deux ressorts (170, 370) sont de raideur équivalente, ou le ressort (370) agissant sur la broche de la partie (200) mâle est de raideur supérieure à celui agissant sur la partie femelle. La combinaison des raideurs des ressorts est choisie, notamment, pour assurer un centrage des deux boches dans la douille de guidage sur une longueur au moins égale à un diamètre de broche. Le jeu radial entre la broche de la partie mâle et le puits de guidage de cette partie mâle est adapté pour permettre le centrage de ladite broche de guidage sans générer de contraintes d'hyperstatisme relativement à d'autres centrages ou détrompeurs du connecteur assemblé. Ainsi, avantageusement, l'extrémité axiale de la broche mâle comporte une forme, par exemple un chanfrein, apte à coopérer avec le chanfrein d'entrée du puits de réception de la partie femelle du connecteur. Avantageusement, la carrosserie de la broche est constituée d'une matière plus dure que celle constituant l'entrée chanfreinée du puits d'insertion de la partie femelle.

Le maintien en pression, l'une contre l'autre, des broches des deux parties du connecteur et leur centrage commun dans une douille de guidage rigide, fait que la connexion est robuste vis-à-vis des vibrations et des petits chocs pouvant intervenir sur le connecteur. De plus, les lentilles de collimation limitent la sensibilité des contacts aux écarts axiaux entre les broches mâles et femelles. Les moyens d'étanchéité, permettent, en plus, à ladite connexion d'être résistante aux conditions environnementales. Ainsi, le connecteur objet de l'invention est particulièrement adapté aux environnements sévères tels que des applications dans le domaine de l'aéronautique.

La même configuration des broches mâles et femelles est utilisée dans un connecteur multivoie, les ensembles de broches mâle-femelle étant parallèles entre eux, les broches mâles se trouvant toutes sur le même demi-connecteur mâle et les broches femelles se trouvant toutes sur le même demi-connecteur femelle. Afin de faciliter le centrage de l'ensemble des broches, le jeu radial des broches mâles dans leur puits de guidage est avantageusement plus important que dans le cas d'un connecteur monovoie.

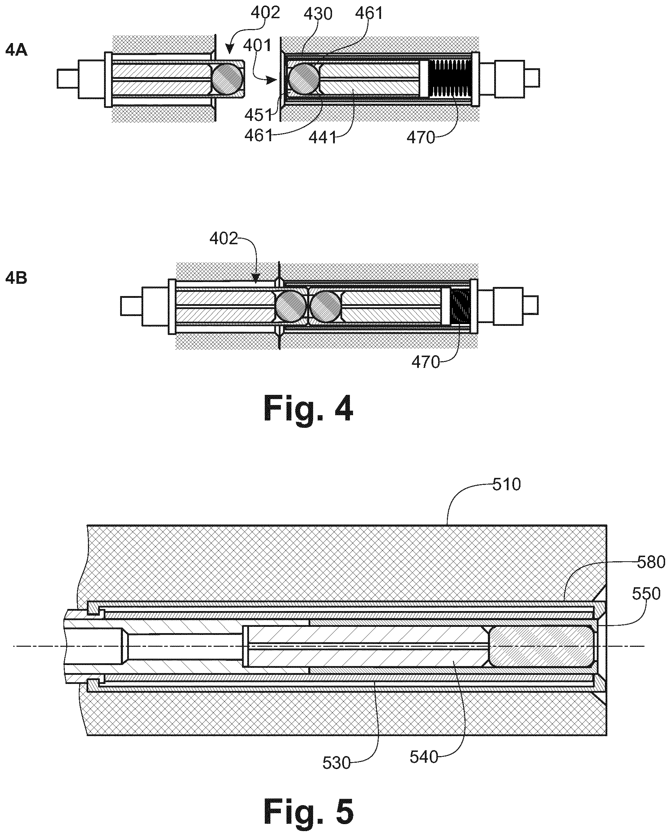

Figure 4, selon un autre mode de réalisation, la broche (402) mâle est fixe axialement par rapport au corps de la partie mâle, et la douille (430) de guidage est liée à la broche (401) femelle. Figure 4A, la broche (401) femelle constituée par la ferrule (441), la carrosserie (451) tubulaire et la lentille (461) de la broche femelle coulisse dans ladite douille (430) de guidage, un ressort (470) appliquant sur cet ensemble un effort axial de sorte qu'en position, dite libre, la lentille (461) affleure l'extrémité axiale de la douille de guidage.

Figure 48, lorsque les parties mâles et femelles du connecteur selon cet exemple de réalisation sont accouplées, la broche (402) mâle pénètre dans la douille (430) de guidage, se centrant ainsi parfaitement vis-à-vis de la broche (401) femelle, en repoussant axialement ladite broche femelle, en comprimant le ressort (470), dont l'action axiale maintient les extrémités des deux broches en contact. Selon une variante de réalisation avantageuse (non représentée) de ce mode de réalisation, la douille de guidage est partiellement fendue longitudinalement afin d'assurer, par élasticité, un centrage sans jeu de la broche (402) mâle dans ladite douille (430).

Ainsi, la douille (430) de guidage étant liée à la broche femelle et non au corps du connecteur, ce mode de réalisation permet de réduire les sollicitations mécaniques de ladite douille (430) lors des manoeuvres d'insertion, limitant ainsi la dérive du tarage de celle-ci et la conservation d'un centrage parfait des deux broches au cours du temps. Le montage coulissant axial de la broche femelle à l'intérieur de ladite douille de guidage et sa position affleurant l'extrémité de ladite douille en position libre, assure une protection de la totalité de la surface de la douille contre les poussières et les chocs, dans le connecteur mais aussi en dehors du connecteur, même sans bouchon. Ainsi, la douille de guidage conserve une bonne élasticité radiale et un bon état de surface permettant d'assurer un centrage relatif efficace des deux broches et la conservation dans le temps des performances optiques du connecteur objet de l'invention.

Figure 5, selon un exemple de mise en oeuvre du mode réalisation précédent, la douille (530) de guidage du connecteur objet de l'invention est maintenue dans une cage (580) qui est fixée à la broche femelle. La carrosserie (550) tubulaire, constituée d'un matériau céramique ou métallique est centrée sur la ferrule (540) du contact et guidée dans la douille (530) de guidage. Ainsi, selon ce mode de réalisation les guidages d'alignement des contacts mâles et femelles sont indépendants du corps (510) du connecteur.

Selon un autre exemple de réalisation, l'invention concerne également un connecteur multivoie pour fibres optiques collimatées comprenant:
- un corps de partie femelle comportant une pluralité de puits de réception comportant chacun une douille de guidage et une broche lentillée comprenant une fibre optique contenue dans une ferrule et maintenue dans une carrosserie tubulaire guidée et ajustée dans ladite douille de guidage et maintenue axialement dans celle-ci en position libre affleurant la face avant de la partie femelle, par un ressort agissant axialement sur ladite broche ;
- une partie mâle comportant un corps comprenant une pluralité de puits de guidage dans chacun desquels coulisse une broche lentillée comprenant une fibre optique contenue dans une ferrule maintenue dans une carrosserie tubulaire, laquelle broche est maintenue axialement par un ressort en position libre en saillie par rapport à la face avant de ladite partie mâle.

Ce connecteur multivoie tire avantage des caractéristiques de l'invention pour obtenir un positionnement relatif optimal des contacts mâles et femelles.

Avantageusement, les broches de la partie mâle comportent un jeu radial par rapport au puits de guidage. Ainsi le centrage radial des broches mâles par rapport aux broches femelles dans les douilles de guidage est réalisé sans hyperstatisme lors de la connexion des deux parties.
La description ci-avant et les exemples de réalisation, montrent que l'invention atteint le but visé, à savoir qu'elle permet d'obtenir un connecteur pour fibres optiques robustes et peu sensible aux conditions environnementales.

## Revendications

1. Connecteur pour fibres optiques comportant :
a. une partie (100), dite femelle, comportant un corps (110, 510) avec une face (111) avant et un puits (120) de réception comprenant :
ai. une douille (130, 530) de guidage ;
aii. une broche (401), dite femelle, comportant une fibre optique (141) contenue dans une ferrule (140, 441, 540) maintenue dans une carrosserie (150, 451, 550) tubulaire ajustée dans la douille (130, 530) de guidage et terminée à son extrémité de contact par une lentille (160);
b. une partie (200), dite mâle, comportant un corps (210) comprenant un puits (220) de guidage, et une broche (402) dite mâle, comprenant une fibre optique contenue dans une ferrule maintenue dans une carrosserie (250) tubulaire d'un diamètre ajusté au diamètre d'alésage de la douille (130) de guidage de la partie (100) femelle et terminée à son extrémité de contact par une lentille (260) ;
c. des moyens (195, 295) d'accouplement de la partie (100) femelle avec la partie (200) mâle,
▪ le puits (120) de réception comprend un ressort (170) appliquant sur ladite broche un effort axial de coulissement par rapport au puits (120) de réception entre une position axiale, dite libre, de ladite broche où la lentille (160) affleure la face avant (111) du corps, et une position axiale, dite engagée, où la lentille (160) est rétractée dans la douille (130) de guidage, d'une distance égale ou supérieure à un diamètre de la broche tout en restant centrée dans ladite douille de guidage sur une longueur égale ou supérieure à un diamètre de la broche,
▪ le corps de la partie (200) mâle comporte un ressort (370) appliquant sur ladite broche mâle un effort axial de coulissement par rapport au puits (220) de guidage entre une position axiale, dite libre, où ladite broche fait saillie par rapport à la face (211) avant de la partie mâle d'une distance supérieure à un diamètre de la broche, et une position dite engagée, où la partie (200) mâle étant connectée à la partie (100) femelle du connecteur, la broche mâle pénètre dans la douille (130) de guidage d'une distance égale ou supérieure à un diamètre de ladite broche.

2. Connecteur selon la revendication 1, dans lequel la douille (130) de guidage est fixée axialement dans le corps de la partie (100) femelle.

3. Connecteur selon la revendication 2, dans lequel l'extrémité axiale de la douille (130) de guidage est en retrait axial par rapport à la face avant (111) de la partie (100) femelle,

4. Connecteur selon la revendication 1, dans lequel la broche femelle comprend :
d. une cage (580) de maintient de la douille (530) de guidage.

5. Connecteur selon la revendication 3, dans lequel le puits (120) d'insertion comprend un chanfrein dans le corps de la partie femelle devant l'extrémité de la douille (130) de guidage.

6. Connecteur selon la revendication 1, dans lequel les ressorts (170, 370) agissant sur les broches des parties mâles et femelle sont de même raideur.

7. Connecteur selon la revendication 1, dans lequel le ressort (370) agissant sur la broche de la partie (200) mâle est de raideur supérieure au ressort (170) agissant sur la broche de la partie femelle.

8. Connecteur selon la revendication 1, dans lequel la lentille (160, 260) de la broche de la partie mâle ou de la partie femelle est en retrait axial par rapport l'extrémité de ladite broche.

9. Connecteur selon la revendication 1, dans lequel l'extrémité de la broche de à partie mâle ou de la partie femelle est terminée par un hublot (261) plat.

## Patentansprüche

1. Steckverbinder für optische Fasern, welcher aufweist:
a. ein sogenanntes weibliches Teil (100), das einen Körper (110, 510) mit einer Vorderfläche (111) und einem Aufnahmeschacht (120) aufweist, umfassend:
ai. eine Führungshülse (130, 530);
aii. einen sogenannten weiblichen Stift (401), der eine optische Faser (141) aufweist, die in einer Druckhülse (140, 441, 540) enthalten ist, die in einem rohrförmigen Gehäuse (150, 451, 550) gehalten wird, das in die Führungshülse (130, 530) eingepasst ist und an seinem Kontaktende durch eine Linse (160) abgeschlossen wird;
b. ein sogenanntes männliches Teil (200), das einen Körper (210) aufweist, der einen Führungsschacht (220) und einen sogenannten männlichen Stift (402) umfasst, der eine optische Faser umfasst, der eine optische Faser umfasst, die in einer Druckhülse enthalten ist, die in einem rohrförmigen Gehäuse (250) mit einem an den Bohrungsdurchmesser der Führungshülse (130) des weiblichen Teils (100) angepassten Durchmesser gehalten wird, das an seinem Kontaktende durch eine Linse (260) abgeschlossen wird;
c. Mittel (195, 295) zur Kupplung des weiblichen Teils (100) mit dem männlichen Teil (200),
▪ wobei der Aufnahmeschacht (120) eine Feder (170) umfasst, die auf den Stift eine axiale Kraft ausübt, zur Verschiebung in Bezug auf den Aufnahmeschacht (120) zwischen einer sogenannten freien axialen Position des Stiftes, in der die Linse (160) bündig mit der Vorderfläche (111) des Körpers abschließt, und einer sogenannten axialen Eingriffsposition, in der die Linse (160) in die Führungshülse (130) um eine Strecke zurückgezogen ist, die gleich einem oder größer als ein Durchmesser des Stiftes ist, und dabei auf einer Länge, die gleich einem oder größer als ein Durchmesser des Stiftes ist, zentriert in der Führungshülse verbleibt,
▪ wobei der Körper des männlichen Teils (200) eine Feder (370) aufweist, die auf den männlichen Stift eine axiale Kraft ausübt, zur Verschiebung in Bezug auf den Führungsschacht (220) zwischen einer sogenannten freien axialen Position, in welcher der Stift in Bezug auf die Vorderfläche (211) des männlichen Teils um eine Strecke vorsteht, die größer als ein Durchmesser des Stiftes ist, und einer sogenannten Eingriffsposition, in welcher der männliche Teil (200) mit dem weiblichen Teil (100) des Steckverbinders verbunden ist, wobei der männliche Stift in die Führungshülse (130) um eine Strecke eindringt, die gleich einem oder größer als ein Durchmesser des Stiftes ist.

2. Steckverbinder nach Anspruch 1, wobei die Führungshülse (130) axial in dem Körper des weiblichen Teils (100) befestigt ist.

3. Steckverbinder nach Anspruch 2, wobei das axiale Ende der Führungshülse (130) in Bezug auf die Vorderfläche (111) des weiblichen Teils (100) axial zurückversetzt ist.

4. Steckverbinder nach Anspruch 1, wobei der weibliche Stift umfasst:
d. einen Käfig (580) zum Halten der Führungshülse (530).

5. Steckverbinder nach Anspruch 3, wobei der Einsteckschacht (120) eine Abfasung im Körper des weiblichen Teils vor dem Ende der Führungshülse (130) umfasst.

6. Steckverbinder nach Anspruch 1, wobei die Federn (170, 370), die auf die Stifte des männlichen und des weiblichen Teils einwirken, dieselbe Federhärte aufweisen.

7. Steckverbinder nach Anspruch 1, wobei die Feder (370), die auf den Stift des männlichen Teils (200) einwirkt, eine höhere Federhärte als die Feder (170) aufweist, die auf den Stift des männlichen Teils einwirkt.

8. Steckverbinder nach Anspruch 1, wobei die Linse (160, 260) des Stiftes des männlichen Teils oder des weiblichen Teils in Bezug auf das Ende des Stiftes axial zurückversetzt ist.

9. Steckverbinder nach Anspruch 1, wobei das Ende des Stiftes des männlichen Teils oder des weiblichen Teils durch eine flache Sichtscheibe (261) abgeschlossen ist.

## Claims

1. Connector for optical fibres comprising:
a. a so-called female part (100), comprising a body (110, 510) with a front face (111) and a reception well (120) comprising:
ai. a guiding socket (130, 530);
aii. a so-called female fin (401), comprising an optical fibre (141) contained in a ferrule (140, 441, 540) held in a tubular body (150, 451, 550) fitted into the guiding socket (130, 530) and terminated at its contact end by a lens (160);
b. a so-called male part (200), comprising a body (210) comprising a guiding well (220), a so-called male pin (402), comprising an optical fibre contained in a ferrule held in a tubular body (250) of a diameter fitted to the bore diameter of the guiding socket (130) of the female part (100) and terminated at its contact end by a lens (260);
c. means (195, 295) for coupling the female part (100) with the male part (200),
• the reception well (120) comprises a spring (170) applying on said pin an axial sliding force in relation to the reception well (120) between a so-called free axial position of said pin in which the lens (160) is flush with the front face (111) of the body, and a so-called engaged axial position, in which the lens (160) is retracted into the guiding socket (130), by a distance equal to or greater than a diameter of the pin while remaining centred in said guiding socket over a length equal to or greater than a diameter of the pin,
• the body of the male part (200) comprises a spring (370) applying on said male pin an axial sliding force in relation to the guiding well (220) between a so-called free axial position, in which said pin protrudes relative to the front face (211) of the male part by a distance greater than a diameter of the pin, and a so-called engaged position, in which, the male part (200) being connected to the female part (100) of the connector, the male part penetrates into the guiding socket (130) by a distance equal to or greater than a diameter of said pin.

2. Connector according to Claim 1, in which the guiding socket (130) is fixed axially in the body of the female part (100).

3. Connector according to Claim 2, in which the axial end of the guiding socket (130) is axially set back in relation to the front face (111) of the female part (100).

4. Connector according to Claim 1, in which the female pin comprises:
d. a cage (580) for holding the guiding socket (530).

5. Connector according to Claim 3, in which the insertion well (120) comprises a chamfer in the body of the female part in front of the end of the guiding socket (130).

6. Connector according to Claim 1, in which the springs (170, 370) acting on the pins of the male and female parts are of the same stiffness.

7. Connector according to Claim 1, in which the spring (370) acting on the pin of the male part (200) has a stiffness greater than the spring (170) acting on the pin of the female part.

8. Connector according to Claim 1, in which the lens (160, 260) of the pin of the male part or of the female part is set back axially in relation to the end of said pin.

9. Connector according to Claim 1, in which the end of the pin of the male part or of the female part is terminated by a flat window (261).
